# EUROPEAN PATENT SPECIFICATION

(11) **EP 0 893 220 B1**
(45) Date of publication and mention of the grant of the patent: **29.01.2003**
(21) Application number: 98112813.5
(22) Date of filing: 10.07.1998
(51) Int. Cl.: B29B 17/02, B29B 17/00, B03B 9/06

(54) **Apparatus for recycling polyethylene, particularly polyethylene foil**
Vorrichtung zur Wiederverwendung von Polyethylen , insbesondere Polyethylen-Folien
Dispositif pour le recyclage de polyéthylène notamment de feuilles de polyéthylène

(30) Priority: 14.07.1997 IT TO970630
(43) Date of publication of application: 27.01.1999
(73) Proprietor: Plastipol s.r.l., 15060 Silvano d'Orba (Alessandria) (IT)
(72) Inventor: Malaspina, Giorgio, 15076 Ovada (IT)
(74) Representative: Spandonari, Carlo, Dr. Ing.

(56) References cited:
- EP-A- 0 304 667
- US-A- 4 073 661
- US-A- 4 809 854
- US-A- 4 830 188
- US-A- 5 143 308
- US-A- 5 255 859
- US-A- 5 375 778

## Description

This invention is concerned with an apparatus for recycling polyethylene, particularly polyethylene foil.

Polyethylene is widely used nowadays, in form of foils or thin films, e.g. for bags, shoppers, envelopes, packagings and the like. These are discarded after use, and their disposal, because of the high chemical stability of the material, is difficult and expensive, as well known in the art.

Because of its thermoplastic nature, polyethylene is, in principle, eminently suitable for recycling by re-melting and re-extruding, but, in actual practice, recycling has been difficult to achieve. The basic ground for such difficulty is that the discarded material is usually dirty with dust and various debris; moreover, it is usually mixed with paper, often in form of gummed labels; and it often incorporates scraps of other plastic materials, such as PVC, polyester, etc. For a satisfactory recycling, all such extraneous materials should be accurately removed, because the presence of different materials, even if similar, such as polypropylene and other thermoplastic materials, even in small percentages, drastically degrades the recycled material and reduces its ability of undergoing extrusion to a thin film, which is the typical processing to which polyethylene is submitted.

Many attempts have been made at providing methods and apparatus for effectively recycling polyethylene. These generally consist in chopping the discarded material and in subjecting it to a more or less elaborate washing, which then leads to melting and granulating the material. However, the apparatus as provided in the past have generally been less than satisfactory, because the material is variable in nature and difficult to handle, and therefore causes frequent stoppages and consequent shutdowns of the apparatus for repair and maintenance. This intermittent operation not only gives rise to greater costs for interventions, but also causes degradation and variability in the quality of the final material as provided by the apparatus.

US-A-4 809 854 discloses an apparatus particularly dedicated to reclaim resin material from scrap bottles. However, the apparatus does not teach how to handle foil material, which tends to creep between the augers and the cases of conveyors, thus jamming them and causing downtimes of the entire system. Moreover, the drying operations in this apparatus are performed with centrifugal dryers, which, if suitable for drying stiff, lump-like chips, would be less than satisfactory for film fragments, which hold more water and possibly create barriers to the expulsion of water.

It is therefore a main object of the invention to provide an apparatus for recycling polyethylene, particularly polyethylene foil, which ensures a more continuous and uniform performance than the recycling apparatus previously known.

Another object of the invention is to provide a polyethylene recycling apparatus which generates a final recycled material having a better and more uniform quality than known apparatus.

Another object of the invention is to provide a polyethylene recycling apparatus having a reduced power consumption.

The above and other objects and advantages; such as will appear from the following disclosure, are achieved by the invention with an apparatus for recycling polyethylene, particularly polyethylene foil, having the features recited in claim 1.

The invention will now be described in more detail, by way of a preferred embodiment, with reference to the attached drawings, wherein:
Fig. 1 is a schematic representation of an apparatus for recycling polyethylene foil, according to a preferred embodiment of the invention;
Fig. 2 is view in axial cross-section of a temporary store belonging to the apparatus of Fig. 1;
Figs. 3, 4, 5 e 6 are a plan view, a view in transverse cross-section, a view in side elevation and a partly broken-away view in end elevation, respectively, of a washing vat belonging to the apparatus of Fig. 1; and
Fig. 7 e 8 are a view in transverse cross-section and a partly broken-away view in side elevation, respectively, of a centrifugal separator belonging to the apparatus of Fig. 1.

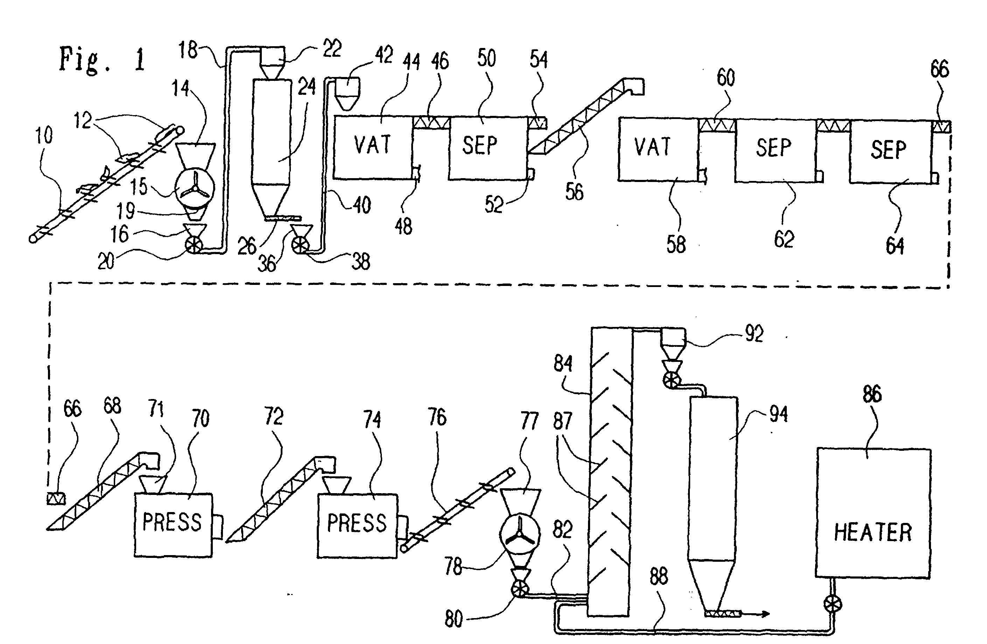

With reference to Fig. 1, an inclined conveyor belt 10 is arranged for feeding scraps of polyethylene foil 12, such as used bags and envelopes, to a hopper 14 of a coarse chopper 15. The material minced by the chopper falls into a hopper 16 and is conveyed into a conduit 18 by a centrifugal blower 20.

Coarse chopper 15 is of a known type having radial cutters in a mincing chamber which is defined by a grid 19 at the bottom. In the preferred case, the holes in the grid have a diameter of about 30 mm, and the fragment size is therefore equal to or less than that diameter. In this stage, the fragments include, beside polyethylene foil, also paper fragments (which may or may not adhere to the polyethylene), and also minute debris of heavy materials of various nature, such as gravel, metals, etc.

Conduit 18 conveys the minced material to a cyclone 22, known per se, which has the object of freeing the material from air and of dropping the material into a silo or cylindrical vertical bin 24, which is tapered at the bottom, so that the material is led to a horizontal auger conveyor 26.

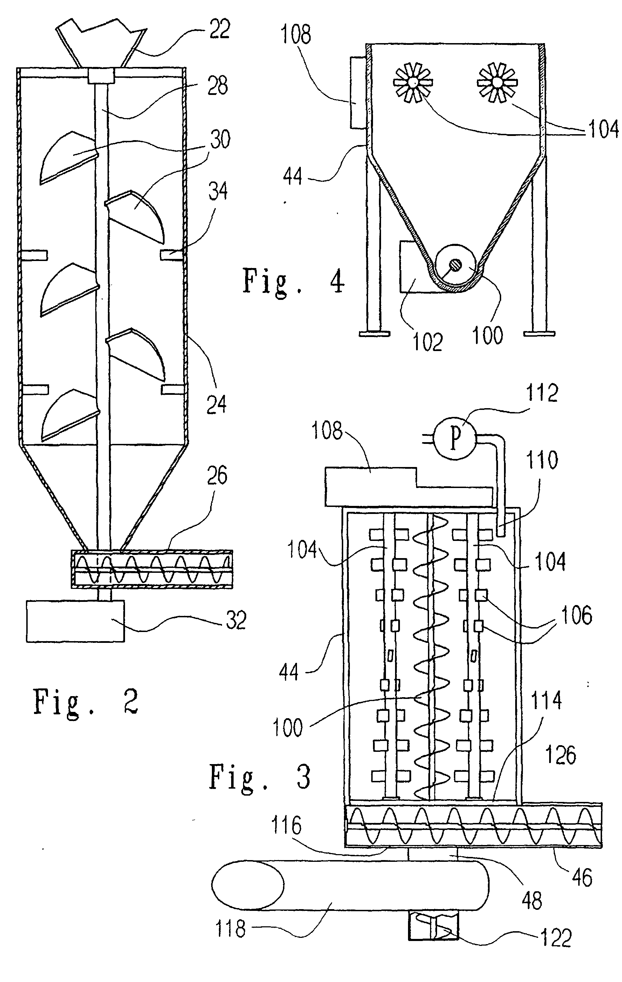

With reference to Fig. 2, a stirrer 28 is mounted in bin 24. Stirrer 28 comprises an axial vertical shaft having radial, oblique blades 30 which are, in practice, sectors of a helical auger. Stirrer 28 is turned by motor means 32, so that it imparts the material a vertical lift to partly neutralize gravity. The lift maintains the material in a soft, buoyant condition and avoids accumulation at the bottom and consequent clogging. Preferably, the inside wall of store 24 has several stationary studs 34, acting as disrupting retainers to prevent the material from turning with stirrer 28 as a block.

With further reference to Fig. 1, auger conveyor 26 picks up the material from the bottom of silo 24 and conveys it, with a uniform flow, to a hopper 36 and from there to a centrifugal blower 38, which feeds a cyclone 42 through a conduit 40. The material then falls from cyclone 42 (having a function similar to cyclone 22) to a washing vat 44, described in more detail below, and having the task of separating material lighter than water (essentially polyethylene) from material heavier than water, and then delivering the former, mixed with water, to an outlet conduit 46 provided with an auger, and dumping the latter to a waste pipe 48.

The material mixed with water coming from conduit 46 is inlet into a centrifugal separator 50, also described in more detail below, which separates the fragments of solid material from the water and removes any residual heavy material, including paper, which is crumbled and removed, as better explained below. The separated water is discharged onto a conduit 52, while the material, now comprising mainly polyethylene fragments, is poured into an auger elevator 56 through a conduit 54.

In order to further purify the polyethylene material, the apparatus preferably comprises a second washing and separating section, which follows the section comprising vat 44 and separator 50. Accordingly, auger elevator 56 dumps the material into a washing vat 58, similar to washing vat 44, and from there the material is fed, through a conduit 60, to a pair of cascaded centrifugal separators 62 and 64, each substantially similar to separator 50.

The material emerging from the third centrifugal separator 64 through conduit 66 has a grade of purity that is satisfactory for re-melting and re-granulation, but has a relatively high humidity, such as 20% to 30%, and requires further drying. The material is therefore fed to a first press 70 through an auger elevator 68.

Press 70, known per se, comprises a tubular, perforated chamber to which the material is loaded through a hopper 71, and within which a rotating screw drives the material toward one end of the chamber, through a narrow delivery passage comprising four jaws. The compression squeezes out the water contained in the material and the water is drained through the holes in the tubular chamber.

Preferably, a second identical press 74 follows press 70, in order to further reduce the water contents in the material that is transferred to it by way of auger elevator 72. From this, the material is finally delivered onto an inclined conveyor belt 76.

After such squeezing treatment, the material reaches a humidity of about 5%, but has undergone a partial plastification due to the heating caused by compression, and therefore has a variable degree of cohesion. Accordingly, conveyor belt 76 feeds the material to a loading hopper 77 of a fine chopper, which is similar to chopper 15 but is provided with a grid having 10-mm holes. The material comes out of chopper 78 in the shape of clean leaflets of a size less than 10-mm, and is engaged by a centrifugal blower 80, which drives it into a conduit 82 and into the bottom of a drying tower 84. Another conduit 88, that is supplied with hot air from a conventional heater 86, also enters the bottom of drying tower 84. The polyethylene coming from conduit 82 therefore mixes with the hot air coming from the heater and is lifted up tower 84. A set of baffles 87 promotes a quick and full blending of both flows by creating a suitable turbulence. The polyethylene then emerges from the top of tower 84 and enters a cyclone 92, now having a degree of humidity that has been reduced to 1% or 2%, and is usually stored in one or more silos 94, to be later converted to granules by conventional melting and extruding techniques.

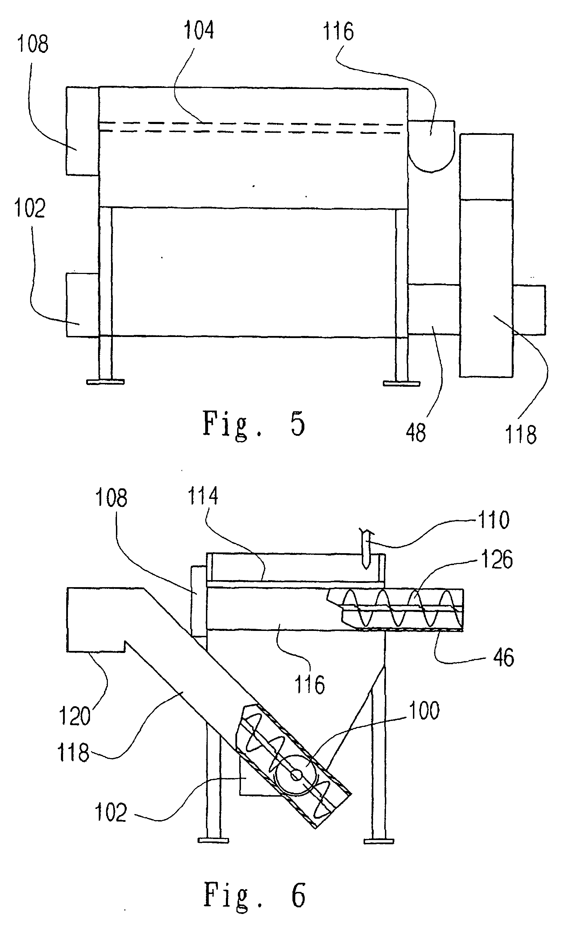

A preferred washing vat 44 will now be described with reference to Figs. 2, 3, 4 and 5. Vat 44 is elongated, is relatively deep, is upwardly open, and tapers downwardly to form a disposal trough, where an extraction auger 100, driven by motor means 102, is housed. Two parallel stirrers 104, extending horizontally within vat 44, comprise respective shafts provided with stirring blades such as 106, and are driven by timed motor means 108. Vat 44 is also provided with a faucet 110, which is supplied by a pump 112, drawing from a source not shown, to deliver a water jet. A weir 114 at one end of the vat leads into a horizontal trough 116, thus keeping a constant water level, slightly above the axes of stirrers 104.

Blades 106 are radially arranged, slightly inclined and offset with respect to one another, so that, beside stirring the water, they also drive the water globally toward weir 114.

The fragmented material falling into vat 44 from cyclone 42 is wet and scoured by the turbulent motion of the water stirred by stirrers 104. Such scouring not only releases the dust, but also dissolves any label gum and soaks the paper with water. Consequently, such polluting and heavy substances as dust, mud, synthetic materials such as PVC and polyesters, soaked paper, etc., fall to the bottom, while polyethylene, having a low density, floats.

The heavy materials that fall as sludge to the bottom of washing vat 44 are driven by extraction auger 100 to horizontal waste pipe 48 (shown only symbolically on Fig. 1), which leads to an inclined auger elevator 118, which in turn lifts the sludge and dumps it through a waste opening, say into a dump box, not shown.

The sludge removal system as described above features several devices to prevent clogging and blocking, which might otherwise arise, due to the variable nature ad quantity of the sludge (comprising solid fragments of various sizes, such as fibers, splinters or flexible leaflets of heavy synthetic materials).

According to one of such inventive devices, extraction auger 100 is discontinued near the blind end of conduit 48, and its shaft has a short auger 122 of opposite direction, immediately adjacent the blind end of the conduit. Inclined elevator 118 is inserted between said augers 100 and 122. This arrangement prevents the sludge from compression and fouling on the blind end of conduit 48. Preferably, a similar arrangement is also used at the upper end of inclined elevator 118 (not shown).

Moreover, in order to prevent tough material from being wedged between the edges of auger 100 and the wall of the trough and of conduit 48, the diameter of the auger is substantially shorter than the diameter of the surrounding wall, so that a gap of about 20 to 30 mm is formed between the wall and the outside edge of the auger.

Since the accumulation of sludge on the bottom of the washing vat is relatively slow, extraction auger 100 is preferably intermittently driven, e.g. with a work ratio of 10% to 20%, i.e., in practice, 15 minutes at every 2 work hours. Both wear and power consumption are reduced by this arrangement.

Fragments of material floating in vat 44, which are progressively freed from heavy materials and are enriched with polyethylene, are dragged toward weir 114 by the water motion and eventually overflow, together with the water, into a horizontal sluice 116, which extends coaxially into tubular conduit 46. An auger 126, driven by motor means not shown, extends in sluice 66 and in tubular conduit 46 to drag the water and polyethylene fragments into the latter.

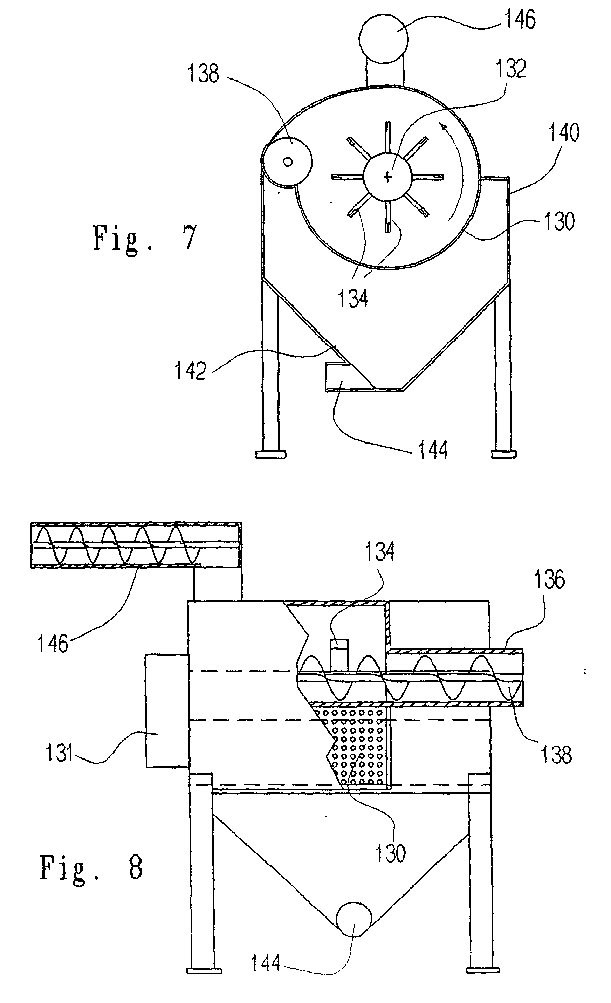

A preferred embodiment of centrifugal separator 50 will now be described with reference to Figs. 7 and 8. The separator comprises a cylindrical cage 130 of perforated metal plate, having holes of about 2 mm diameter, and closed at both ends. A rotor 132 is rotatably supported at the horizontal axis of cage 130, and is driven at a high speed by motor means 131. The rotor carries radial blades 134, which are slightly aslant to the rotor axis, and are reinforced with replaceable hardened plates at their edges. One side of cage 130 forms a recess leading into an outlet conduit 136, within which an auger 138 is received. Cage 130 is surrounded by a closed housing 140 having an inclined bottom 142 which terminates into a drain pipe 144 for the separated water. In its upper area, cage 130 has an inlet opening for a conduit 146, which may be the same as conduit 46 of Fig. 1.

As the fragmented material enters into centrifugal separator 50, together with water, it is hurled against the surrounding cage 130 by the rapid rotation of rotor 132, and is freed from the water, the latter flowing through the holes and being drained into drain pipe 144, while the solid fragments of polyethylene are withdrawn within the cage and are progressively dragged from one end to the other end of the separator and are eventually channeled into delivery conduit 136, where they are collected and pushed outside by auger 138. Beside removing the water, the centrifugal force and the shaking which the fragments undergo in the separator also have the effect of crumbling and dispersing any residues of paper and cellulose which might have survived the treatment in washing vat 44.

The recycling apparatus described above has been run to obtain a granulated polyethylene of a quality adequate to allow extrusion to a thin film, as used for shopping and garbage bags. The devices used in the apparatus have eliminated or drastically reduced most causes of blocking and clogging which used to give rise to frequent stoppages in past attempts to recycle polyethylene.

A preferred embodiment of the invention has been disclosed above, in which an optimum effectiveness has been sought, both in the grade of purity of the produced polyethylene and in the running costs, particularly from the standpoint of power consumption. However, it is evident that modifications and changes may be made in the described embodiment. For instance, although the inventor has deemed it suitable to provide two subsequent steps of washing and separating, it is possible that in certain circumstances a single washing vat with one centrifugal separator might be sufficient, or, similarly, the two cascaded centrifugal separators after the second washing vat might be reduced to one separator only.

## Claims

1. Apparatus for recycling polyethylene, comprising
- a coarse chopper (15), adapted to be fed with discarded material prevalently comprising polyethylene foil and to mince it into coarse-sized fragments;
- storing and metering means (24, 26), adapted to receive and to store the material produced by the coarse chopper and to deliver it at a substantially constant flow;
- a washing vat (44), adapted to continuously receive water and material delivered from said storing and metering means and to separate it, by stirring and gravity, into a part of lightweight material substantially consisting of polyethylene and into a part of heavy material, which will precipitate as sludge, and to deliver a mixture of water and lightweight material;
- a centrifugal separator (50), adapted to receive said mixture of water and lightweight material and to subject it to a strong swirling motion within a perforated cage (130) having holes of a size smaller than the average size of the lightweight material in order to expel water and flaking material out of the cage, the centrifugal separator being provided with means for delivering the separated material continuously as polyethylene; and
- at least one screw press (70, 74) is arranged to receive the lightweight material from the centrifugal separator for squeezing the received material to remove the residual water, and a fine chopper (78), is arranged to receive the material from the press and to chop it to a fine size; and
- drying means (84, 86, 87) for drying the fine sized lightweight material.

2. The apparatus for recycling polyethylene of claim 1, **characterized in that** said storing and metering means comprise:
- a vertical, cylindrical bin (24), tapering at its bottom, wherein a stirrer (28) having radial oblique blades (30) is rotatable, and adapted to impart an upward lift to the material;
- a horizontal auger conveyor (26) arranged at the bottom of the bin, for receiving and conveying the material falling from the bin to a delivery conduit for supplying the first washing vat.

3. The apparatus for recycling polyethylene of claim 2, **characterized in that** several disrupting studs project inwardly from the wall of said vertical bin (24).

4. The apparatus for recycling polyethylene of any of claims 1 to 3, **characterized in that** said first washing vat (44) is an elongated vat in which at least two parallel, rotating stirrers (104) extend horizontally, the stirrers being rotated and being provided with blades (106) slightly inclined with respect to the longitudinal direction of the vat, and **in that** the vat is provided with means (100, 102, 118, 122) for collecting and dumping the sludge.

5. The apparatus for recycling polyethylene of claim 4, **characterized in that** said first washing vat (44) has a trough-shaped bottom in which a rotatable auger (100) is received, the auger being adapted to convey the precipitated sludge toward a coaxial waste conduit.

6. The apparatus for recycling polyethylene of claim 5, **characterized in that** the diameter of said auger is substantially smaller than the diameter of said trough.

7. The apparatus for recycling polyethylene of claim 5, **characterized in that** said auger is driven intermittently.

8. The apparatus for recycling polyethylene of any of claims 1 to 7, **characterized in that** said first centrifugal separator (50) comprises a closed, at least partly perforated cage (130), within which is rotatably housed a rotor (132) with a horizontal axis, provided with radial blades (134), and **in that** the cage has a recess extending into a delivery conduit parallel to the rotor and housing an extraction auger (138).

9. The apparatus for recycling polyethylene of any of claims 1 to 8, **characterized in that** it comprises a second washing vat (58) and at least a second centrifugal separator (62, 64), arranged in cascade downstream of said first centrifugal separator.

10. The apparatus for recycling polyethylene of any of claims 1 to 9, **characterized in that** said drying means (84, 86, 87) comprise a drying tower (84) to the bottom of which finely-chopped, purified polyethylene material and pressurized hot air are continuously fed, and from the top of which dried polyethylene is withdrawn.

11. The apparatus for recycling polyethylene of claim 10, **characterized in that** said tower is provided in its interior with several oblique baffles (87) adapted to lead the air and the material along a zigzag path.

## Patentansprüche

1. Vorrichtung zum Recyceln von Polyethylen mit
- einem Grobzerkleinerer (15), der dazu eingerichtet ist, überwiegend Polyethylenfolie enthaltendes Abfallmaterial zugeführt zu bekommen und es in grobe Bruchstücke zu zerhacken;
- einer Speicher- und Dosiereinrichtung (24, 26), die das von dem Grobzerkleinerer erzeugte Material aufzunehmen und zu speichern und es mit einer im wesentlichen konstanten Strömung zu liefern vermag;
- einem Waschbottich (44), der dazu eingerichtet ist, kontinuierlich Wasser und von der Speicher- und Dosiereinrichtung geliefertes Material aufzunehmen und es durch Rühren und Schwerkraft in einen Teil aus leichtgewichtigem Material, der im Wesentlichen aus Polyethylen besteht, und einen Teil aus schwerem Material zu trennen, der sich als Bodensatz absetzt, und eine Mischung aus Wasser und leichtgewichtigem Material zu liefern;
- einem Zentrifugalseparator (50), der dazu eingerichtet ist, die Mischung aus Wasser und leichtgewichtigem Material aufzunehmen und sie einer starken Wirbelbewegung in einem perforierten Käfig (130) auszusetzen, der Löcher mit einer Größe aufweist, die kleiner als die durchschnittliche Größe des leichtgewichtigen Materials ist, um Wasser und Flockenmaterial aus dem Käfig auszutragen, wobei der Zentrifugalseparator mit einer Einrichtung zum kontinuierlichen Abgeben des getrennten Materials als Polyethylen versehen ist; und wobei
- mindestens eine Schraubpresse (70, 74) zur Aufnahme des leichtgewichtigen Materials von dem Zentrifugalseparator vorhanden ist, um das aufgenommene Material zur Entfernung des restlichen Wassers zu quetschen, und ein Feinzerkleinerer (78) vorhanden ist, um das Material von der Presse aufzunehmen und es in kleine Teile zu zerhacken; und
- einer Trocknungseinrichtung (84, 86, 87) zum Trocknen des kleinteiligen leichtgewichtigen Materials.

2. Vorrichtung zum Recyceln von Polyethylen nach Anspruch 1,
**dadurch gekennzeichnet, dass** die Speicher- und Dosiereinrichtung umfasst:
- einen vertikalen, zylindrischen Behälter (24), der sich an seinem Boden verjüngt, in dem ein Rührer (28) mit radial schrägen Blättern (30) drehbar ist, und der einen nach oben gerichteten Auftrieb auf das Material zu übertragen vermag;
- einen am Boden des Behälters angeordneten horizontalen Schneckenförderer (26) zum Aufnehmen des aus dem Behälter fallenden Materials und Fördern zu einer Förderleitung zur Versorgung des ersten Waschbottichs.

3. Vorrichtung zum Recyceln von Polyethylen nach Anspruch 2,
**dadurch gekennzeichnet, dass** mehrere Trennbolzen von der Wand des vertikalen Behälters (24) nach innen ragen.

4. Vorrichtung zum Recyceln von Polyethylen nach einem der Ansprüche 1 bis 3,
**dadurch gekennzeichnet, dass** der erste Waschbottich (44) ein langgestreckter Bottich ist, in dem sich mindestens zwei parallele, drehende Rührer (104) horizontal erstrecken, wobei die Rührer gedreht werden und mit Blättern (106) versehen sind, die bezüglich der Längsrichtung des Bottichs leicht geneigt sind, und dadurch, dass der Bottich mit einer Einrichtung (100, 102, 118, 122) zum Sammeln und Austragen des Bodensatzes versehen ist.

5. Vorrichtung zum Recyceln von Polyethylen nach Anspruch 4,
**dadurch gekennzeichnet, dass** der erste Waschbottich (44) einen muldenförmigen Boden aufweist, in dem eine drehbare Schnecke (100) aufgenommen ist, wobei die Schnecke dazu eingerichtet ist, den abgesetzten Bodensatz in Richtung einer koaxialen Abfallleitung zu fördern.

6. Vorrichtung zum Recyceln von Polyethylen nach Anspruch 5,
**dadurch gekennzeichnet, dass** der Durchmesser der Schnecke wesentlich kleiner ist als der Durchmesser der Mulde.

7. Vorrichtung zum Recyceln von Polyethylen nach Anspruch 5,
**dadurch gekennzeichnet, dass** die Schnecke intermittierend angetrieben wird.

8. Vorrichtung zum Recyceln von Polyethylen nach einem der Ansprüche 1 bis 7,
**dadurch gekennzeichnet, dass** der erste Zentrifugalseparator (50) einen geschlossenen, zumindest teilweise perforierten Käfig (130) umfasst, in dem ein mit radialen Blättern (134) versehener Rotor (132) mit einer horizontalen Achse drehbar aufgenommen ist, und dadurch; dass der Käfig eine Ausnehmung aufweist, die sich in eine Förderleitung parallel zu dem Rotor erstreckt und eine Extraktionsschnecke (138) aufnimmt.

9. Vorrichtung zum Recyceln von Polyethylen nach einem der Ansprüche 1 bis 8,
**dadurch gekennzeichnet, dass** sie einen zweiten Waschbottich (58) und mindestens einen zweiten Zentrifugalseparator (62, 64) umfasst, der kaskadenartig stromabwärts des ersten Zentrifugalseparators angeordnet ist.

10. Vorrichtung zum Recyceln von Polyethylen nach einem der Ansprüche 1 bis 9,
**dadurch gekennzeichnet, dass** die Trocknungseinrichtung (84, 86, 87) einen Trocknungsturm (84) umfasst, dessen Boden fein zerhacktes, gereinigtes Polyethylenmaterial und heiße Luft unter Druck kontinuierlich zugeführt werden, und von dessen Oberseite getrocknetes Polyethylen entnommen wird.

11. Vorrichtung zum Recyceln von Polyethylen nach Anspruch 10,
**dadurch gekennzeichnet, dass** der Turm in seinem Inneren mit mehreren schrägen Ablenkplatten (87) versehen ist, die dazu eingerichtet sind, die Luft und das Material entlang eines Zickzackpfades zu leiten.

## Revendications

1. Appareil de recyclage de polyéthylène, comprenant
- un hachoir pour hacher gros (15), adapté pour être alimenté en matériau de rebut essentiellement composé de feuilles de polyéthylène et pour le hacher en fragments grossiers en taille ;
- des moyens de stockage et de dosage (24, 26), adaptés pour recevoir et stocker le matériau produit par le hachoir et le délivrer selon un flux sensiblement constant ;
- une cuve de lavage (44), adaptée pour recevoir en continu de l'eau et du matériau amené depuis ledit moyen de stockage et de dosage et pour le séparer, par agitation et gravité, en une partie de matériau léger composé essentiellement de polyéthylène et en une partie de matériau lourd, qui précipite sous la forme d'une boue, et pour délivrer un mélange d'eau et de matériau léger ;
- un séparateur centrifuge (50), adapté pour recevoir ledit mélange d'eau et de matériau léger et pour le soumettre à un mouvement de tourbillon important au sein d'une cage perforée (130) présentant des trous de diamètre plus petit que la taille moyenne du matériau léger, afin d'expulser l'eau et le matériau en lamelles de la cage, le séparateur centrifuge étant muni de moyens pour délivrer le matériau séparé en continu en tant que polyéthylène ; et
- au moins une presse à vis (70, 74) est disposée de façon à recevoir le matériau léger provenant du séparateur centrifuge pour presser le matériau reçu et éliminer l'eau résiduelle et un hachoir pour hacher fin (78) est disposé pour recevoir le matériau provenant de la presse et pour le hacher jusqu'à une petite taille ; et
- des moyens de séchage (84, 86, 87) destiné à sécher le matériau léger de petite taille.

2. Appareil de recyclage de polyéthylène selon la revendication 1, **caractérisé en ce que** les moyens de stockage et de dosage comprennent :
- une trémie verticale cylindrique (24), s'amincissant dans sa partie inférieure, dans laquelle un agitateur (28) présentant des pales obliques radiales (30) peut tourner, et adaptée pour conférer au matériau un mouvement ascendant ;
- un transporteur horizontal à vis (26) disposé dans la partie inférieure de la trémie, destiné à recevoir et transporter le matériau tombant de la trémie jusqu'à une conduite d'alimentation destinée à alimenter la première cuve de lavage.

3. Appareil de recyclage de polyéthylène selon la revendication 2, **caractérisé en ce que** plusieurs tiges de dislocation font saillie vers l'intérieur depuis la paroi de ladite trémie verticale (24).

4. Appareil de recyclage de polyéthylène selon l'une quelconque des revendications 1 à 3, **caractérisé en ce que** ladite première cuve de lavage (44) est une cuve allongée dans laquelle au moins deux agitateurs rotatifs parallèles (104) s'étendent horizontalement, les agitateurs étant entraînés en rotation et étant munis de pales (106) légèrement inclinées par rapport à la direction longitudinale de la cuve, et **en ce que** la cuve est équipée de moyens (100, 102, 118, 122) pour collecter et évacuer les boues.

5. Appareil de recyclage de polyéthylène selon la revendication 4, **caractérisé en ce que** ladite première cuve de lavage (44) présente un fond en forme de rigoles dans laquelle est logée une vis rotative (100), la vis étant adaptée pour transporter la boue précipitée vers une conduite coaxiale pour déchets.

6. Appareil de recyclage de polyéthylène selon la revendication 5, **caractérisé en ce que** le diamètre de ladite vis est sensiblement inférieur au diamètre de ladite rigole.

7. Appareil de recyclage de polyéthylène selon la revendication 5, **caractérisé en ce que** ladite vis est entraînée par intermittence.

8. Appareil de recyclage de polyéthylène selon l'une quelconque des revendications 1 à 7, **caractérisé en ce que** ledit premier séparateur centrifuge (50) comprend une cage (130) fermée, au moins partiellement perforée, dans laquelle est logé, de façon à pouvoir tourner, un rotor (132) présentant un axe horizontal, équipé de pales radiales (134), et **en ce que** la cage présente un renforcement qui s'étend en une conduite de sortie parallèle au rotor et logeant une vis d'extraction (138).

9. Appareil de recyclage de polyéthylène selon l'une quelconque des revendications 1 à 8, **caractérisé en ce qu'**il comprend une seconde cuve de lavage (58) et au moins un second séparateur centrifuge (62,64), disposés en cascade en aval dudit premier séparateur centrifuge.

10. Appareil de recyclage de polyéthylène selon l'une quelconque des revendications 1 à 9, **caractérisé en ce que** lesdits moyens de séchage (84, 86, 87) comprennent une tour de séchage (84) dans le bas de laquelle du matériau de polyéthylène, hâché finement et purifié, et de l'air sous pression sont amenés en continu, et depuis le haut de laquelle du polyéthylène séché est retiré.

11. Appareil de recyclage de polyéthylène selon la revendication 10, **caractérisé en ce que** ladite tour est munie à l'intérieur de plusieurs déflecteurs obliques (87) adaptés pour diriger l'air et le matériau le long d'une trajectoire en zigzag.
